# EUROPEAN PATENT APPLICATION

(11) **EP 4 618 252 A1**
(43) Date of publication of application: **17.09.2025**
(21) Application number: 24865628.2
(22) Date of filing: 24.06.2024
(51) Int. Cl.: H01M 10/6556, H01M 10/613, H01M 10/625

(54) **BATTERY PACK**

(30) Priority: 11.09.2023 KR 20230120714
(71) Applicant: LG Energy Solution, Ltd., Seoul 07335 (KR)
(72) Inventor: AHN, Jun-Young, Daejeon 34122 (KR); PARK, So-Jeong, Daejeon 34122 (KR); SONG, Jong-Min, Daejeon 34122 (KR); OH, Kwang-Keun, Daejeon 34122 (KR); LEE, Yong-Ho, Daejeon 34122 (KR); JUNG, In-Hyuk, Daejeon 34122 (KR); YANG, Jin-Oh, Daejeon 34122 (KR)
(74) Representative: Goddar, Heinz J.
(86) International application number: PCT/KR2024/008723
(87) International publication number: WO 2025/058184

(57) **Abstract**

A battery pack is disclosed. The battery pack according to an embodiment of the present disclosure includes a case including a base plate and providing an internal space, a cell array structure disposed on the base plate and including a plurality of battery cells, a cooling tube disposed in the case, equipped in the cell array structure and extended in a downward direction, and a connector in communication with the cooling tube.

## Description

### TECHNICAL FIELD

The present disclosure relates to a battery pack.

This application is based on and claims priority from Korean Patent Application No. 10-2023-0120714, filed on September 11, 2023, with the Korean Intellectual Property Office, the disclosure of which is incorporated herein in its entirety by reference.

### BACKGROUND

There has been a dramatic increase in demand for portable electronic products such as laptop computers, video cameras and mobile phones, and with the widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based batteries for their advantages that recharging can be done whenever it is convenient, the self-discharge rate is very low and the energy density is high.

Lithium secondary batteries primarily use lithium-based oxide and carbon materials as a positive electrode active material and a negative electrode active material, respectively. A lithium secondary battery includes an electrode assembly including a positive electrode plate and a negative electrode plate respectively coated with the positive electrode active material and the negative electrode active material with a separator interposed between the positive electrode plate and the negative electrode plate, and an outer packaging material or a battery case accommodating the electrode assembly and an electrolyte solution in an air-tight manner.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the outer packaging material.

Recently, secondary batteries are widely used for power or energy storage in not only small devices such as mobile electric devices but also medium- or large-sized devices such as electric vehicles or Energy Storage Systems (ESS). A plurality of secondary batteries may be electrically connected and received in a module case to form a battery module. Additionally, a plurality of battery modules may be connected to form a battery pack.

However, when the plurality of secondary batteries (battery cells) or the plurality of battery modules are densely packed in a narrow space, assembly efficiency may be low. There is a need for a structure with improved energy density and assembly efficiency of the battery pack.

### SUMMARY

### Technical Problem

An object of the present disclosure is to solve these and other problems.

Another object of the present disclosure is to provide a battery pack with improved assembly efficiency.

Still another object of the present disclosure is to provide a battery pack with improved energy density.

### Technical Solution

To achieve the above-described objectives, a battery pack according to an embodiment of the present disclosure includes a case including a base plate and providing an internal space; a cell array structure disposed on the base plate and including a plurality of battery cells; a cooling tube disposed in the case, equipped in the cell array structure and extended in a downward direction; and a connector in communication with the cooling tube.

Additionally, the cooling tube and the connector may be in communication with each other in a top-bottom direction.

Additionally, the battery pack may further include a first flexible cooling tube in communication with the connector.

Additionally, the connector may bring the cooling tube and the first flexible cooling tube into communication with each other in a top-bottom direction.

Additionally, the battery pack may further include a port equipped in the case, and the first flexible cooling tube may be in communication with the port.

Additionally, the first flexible cooling tube may include a corrugated tube.

Additionally, the battery pack may further include a support disposed in the case and configured to fix the connector.

Additionally, the support may be installed at an upper surface of the base plate, and the connector may be installed at an upper surface of the support.

Additionally, the cell array structure may include a first cell array structure disposed at an upper surface of the base plate; and a second cell array structure disposed at an upper surface of the first cell array structure, the cooling tube may include a first cooling tube equipped in the first cell array structure and extended in the downward direction; and a second cooling tube equipped in the second cell array structure and extended in the downward direction, and the connector may include a first connector in communication with the first cooling tube; and a second connector in communication with the second cooling tube.

Additionally, the battery pack may further include a second flexible cooling tube that brings the first connector and the second connector into communication with each other.

A vehicle according to an aspect of the present disclosure includes the battery pack of the present disclosure.

### Advantageous Effects

According to at least one of the embodiments of the present disclosure, it may be possible to improve assembly efficiency of the battery pack.

According to at least one of the embodiments of the present disclosure, it may be possible to improve energy density of the battery pack.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a perspective view of a battery pack according to an embodiment of the present disclosure.
FIG. 2 is an exploded view showing some components of a battery pack according to an embodiment of the present disclosure.
FIG. 3 is a diagram showing a support and a connector of a battery pack according to an embodiment of the present disclosure.
FIG. 4 is a diagram showing some components of a battery pack according to an embodiment of the present disclosure.
FIG. 5 is a diagram showing a side wall coupled to a base plate of a battery pack according to an embodiment of the present disclosure.
FIG. 6 is a diagram showing a first cell array structure coupled to a base plate of a battery pack according to an embodiment of the present disclosure.
FIGs. 7 and 8 are diagrams showing a second cell array structure of a battery pack according to an embodiment of the present disclosure.
FIG. 9 is a diagram showing a first cell array structure and a second cell array structure separated from each other in a battery pack according to an embodiment of the present disclosure.
FIG. 10 is a diagram showing a first cell array structure and a second cell array structure coupled to each other in a battery pack according to an embodiment of the present disclosure.
FIG. 11 is a diagram showing a first cell array structure coupled to a base plate of a battery pack according to an embodiment of the present disclosure.
FIG. 12 is a diagram showing a first cell array structure and a second cell array structure separated from each other in a battery pack according to an embodiment of the present disclosure.
FIG. 13 is a diagram showing a first cell array structure and a second cell array structure coupled to each other in a battery pack according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

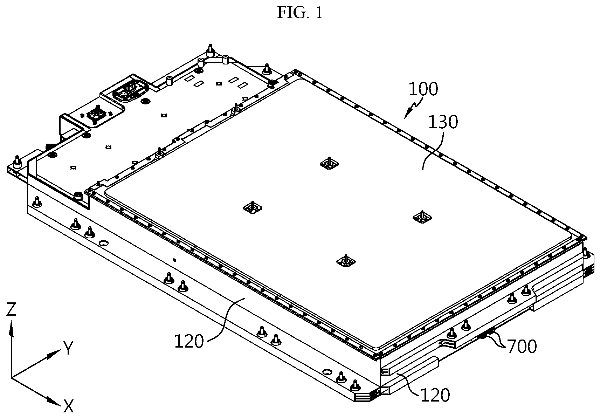

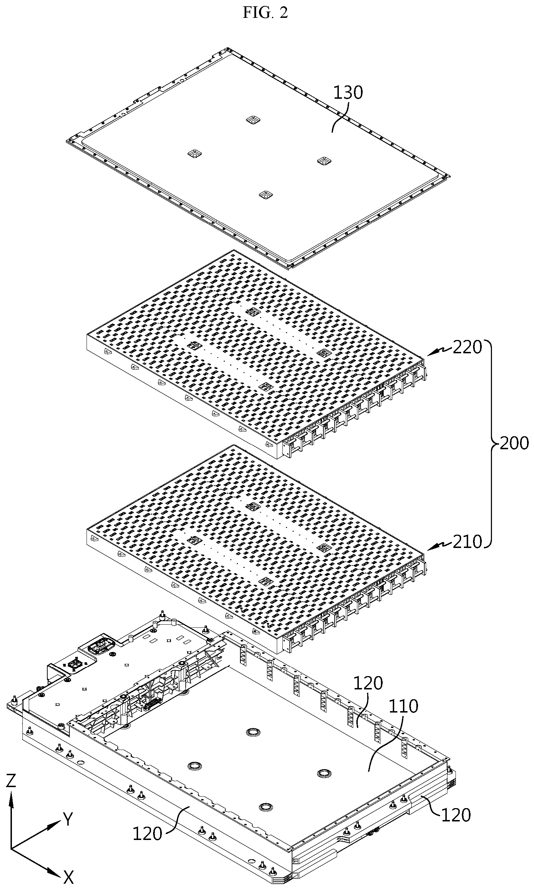

FIG. 1 is a perspective view of a battery pack according to an embodiment of the present disclosure. FIG. 2 is an exploded view showing some components of the battery pack according to an embodiment of the present disclosure. Referring to FIGs. 1 and 2, the battery pack according to an embodiment of the present disclosure may include a case 100, cell array structures 200, 210, 220, a cooling tube and connectors 510, 530, 540.

The case 100 may provide an internal space. The case 100 may include a base plate 110, a side wall 120 and a top cover 130. The base plate 110 may have a flat plate shape. The base plate 110 may be rectangular in shape.

The side wall 120 may be fastened, coupled, fixed or attached to the upper surface of the base plate 110. The side wall 120 may be disposed around the base plate 110. The side wall 120 may be extended in the top-bottom direction or Z axis direction.

The top cover 130 may cover a space formed by the base plate 110 and the side wall 120. The top cover 130 may be fastened, coupled, fixed or attached to the side wall 120. The top cover 130 may have a flat plate shape. The top cover 130 may be rectangular in shape.

The cell array structures 200, 210, 220 may include a plurality of battery cells. The plurality of battery cells may form an array. In this instance, the battery cell may refer to a secondary battery. Additionally, the battery cell may be cylindrical in shape. The cell array structures 200, 210, 220 may be received in the internal space of the case 100. The cell array structures 200, 210, 220 may be disposed on the base plate 110.

The cooling tubes 410, 430, 440 may be disposed inside the case 100. The cooling tubes 410, 430, 440 may allow a cooling liquid or cooling gas to flow. The cooling tubes 410, 430, 440 may be equipped in the cell array structures 200, 210, 220. The cooling tubes 410, 430, 440 may cool down heat from the cell array structures 200, 210, 220. Additionally, the cooling tubes 410, 430, 440 may be extended in the top-bottom direction, Y axis direction or the downward direction. The cooling tubes 410, 430, 440 may be open in the downward direction or -Y axis direction.

The connectors 510, 530, 540 may be in communication with the cooling tubes 410, 430, 440. The connectors 510, 530, 540 may change the flow direction of the cooling liquid or cooling gas flowing through the cooling tubes 410, 430, 440.

The cooling tubes 410, 430, 440 and the connectors 510, 530, 540 may be connected, communicated, fastened or coupled in the top-bottom direction or Y axis direction. The cell array structures 200, 210, 220 may be fastened, assembled, received or coupled in the top-bottom direction or Y axis direction. In this instance, as the cell array structures 200, 210, 220 are fastened, assembled, received, coupled or fixed to the base plate 110, the cooling tubes 410, 430, 440 and the connectors 510, 530, 540 may be connected, communicated, fastened or coupled to each other.

By this configuration of the present disclosure, assembly efficiency of the battery pack may be improved. The assembly of the cell array structures 200, 210, 220 and the assembly of the cooling tubes 410, 430, 440 may be done simultaneously.

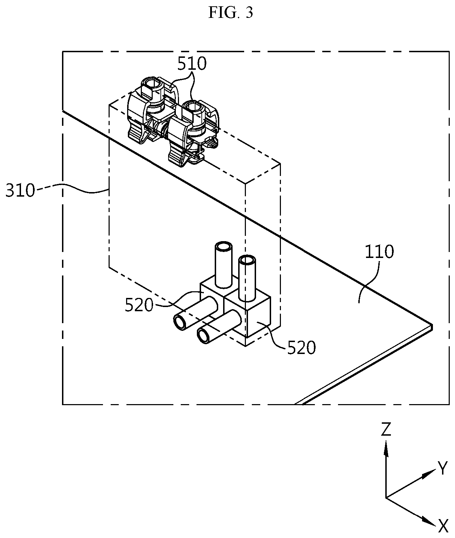

FIG. 3 is a diagram showing a first support 310 and a first connector 510 of the battery pack according to an embodiment of the present disclosure. Referring to FIG. 3, the battery pack according to an embodiment of the present disclosure may include the first support 310. The first support 310 may be disposed inside the case 100.

The first support 310 may be fastened, coupled, fixed, attached or assembled to the base plate 110 or the side wall 120. The first support 310 may fix the first connector 510. In this instance, the first connector 510 may include a pair of first connectors. The pair of first connectors 510 may be in communication with the first cooling tube 410 supplying the cooling fluid to the second cell array structure 220 and the first cooling tube 410 in which the cooling fluid from the second cell array structure 220 flows, respectively.

By this configuration of the present disclosure, the first connector 510 may be stably fixed to the inside of the case 100. Accordingly, when assembling the second cell array structure 220, the first cooling tube 410 and the first connector 510 may be in communication with each other.

Referring to FIG. 3, the first support 310 of the battery pack according to an embodiment of the present disclosure may be fastened, coupled, fixed, attached or installed to the upper surface of the base plate 110. Additionally, the first support 310 may be fastened, coupled, fixed, attached or assembled to the side wall 120.

The first connector 510 may be installed, fixed, coupled, attached, assembled, fixed or disposed to the upper surface of the first support 310.

By this configuration of the present disclosure, the first connector 510 may be in communication with the first cooling tube 410 in the top-bottom direction. Accordingly, assembly efficiency of the battery pack may be improved.

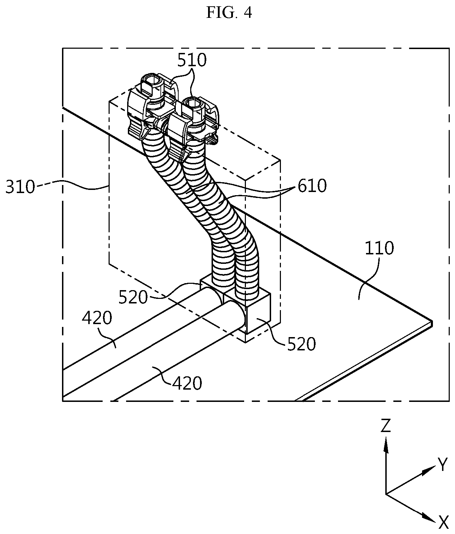

FIG. 4 is a diagram showing some components of the battery pack according to an embodiment of the present disclosure. Referring to FIG. 4, the battery pack according to an embodiment of the present disclosure may include a first flexible cooling tube 610. The first flexible cooling tube 610 may include a pair of first flexible cooling tubes. The first flexible cooling tube 610 may be in communication with the first connector 510. The first cooling tube 410 and the first flexible cooling tube 610 may be in communication with each other. The first flexible cooling tube 610 may be disposed inside the first support 310.

By this configuration of the present disclosure, assembly efficiency of the battery pack may be improved. As the first flexible cooling tube 610 bends, space efficiency of the battery pack may be improved.

Referring to FIG. 4, the first flexible cooling tube 610 of the battery pack according to an embodiment of the present disclosure may include a flexible material. Alternatively, the first flexible cooling tube 610 may be a pleated tube. Alternatively, the first flexible cooling tube 610 may be a corrugated tube. The first flexible cooling tube 610 may bend and easily be in communication with the first connector 510 in the limited space.

By this configuration of the present disclosure, assembly efficiency of the battery pack may be improved. As the first flexible cooling tube 610 bends, space efficiency of the battery pack may be improved.

Referring to FIGs. 1 and 4, the battery pack according to an embodiment of the present disclosure may include a port 700. The port 700 may be equipped in the case 100. The port 700 may include a pair of ports. The cooling fluid may flow in or out of the battery pack through the port 700. The pair of ports 700 may be an inlet port 700 and an outlet port 700.

The first flexible cooling tube 610 may be in communication with the port 700. The pair of first flexible cooling tubes 610 may be in communication with the pair of ports 700, respectively.

By this configuration of the present disclosure, assembly efficiency of the battery pack may be improved. The assembly of the second cell array structure 220, the assembly of the first cooling tube 410 and the assembly of the port 700 may be done simultaneously.

Referring to FIG. 4, the battery pack according to an embodiment of the present disclosure may include a second connector 520. The second connector 520 may include a pair of second connectors. The second connector 520 may be disposed, installed, fixed, coupled or fastened to the inside of the first support 310. The second connector 520 may be in communication with the first flexible cooling tube 610.

Additionally, the second connector 520 may be in communication with a second cooling tube 420. One side of the second cooling tube 420 may be in communication with the second connector 520 and the other side may be in communication with the port 700.

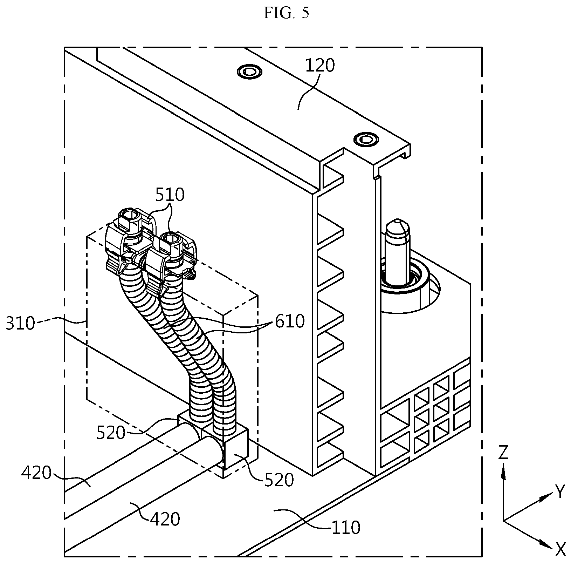

FIG. 5 is a diagram showing the side wall 120 coupled to the base plate 110 of the battery pack according to an embodiment of the present disclosure. Referring to FIG. 5, the side wall 120 of the battery pack according to an embodiment of the present disclosure may be installed at the upper surface of the base plate 110. The first support 310 may be disposed on the inner side of the side wall 120.

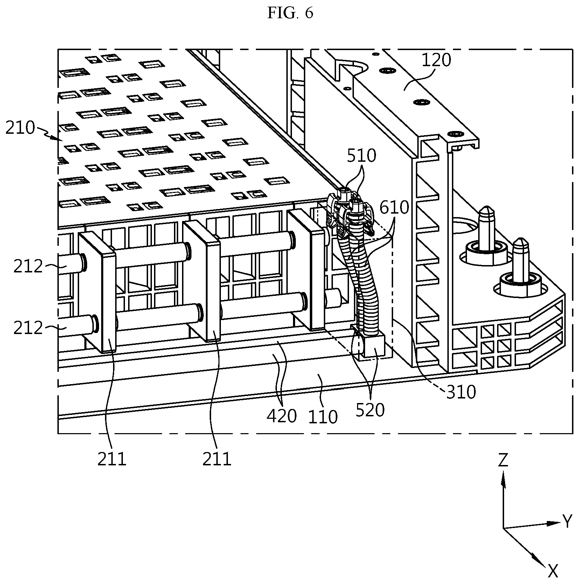

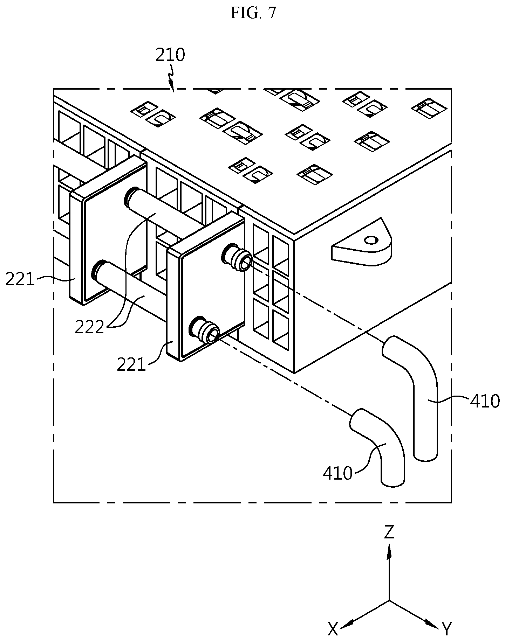

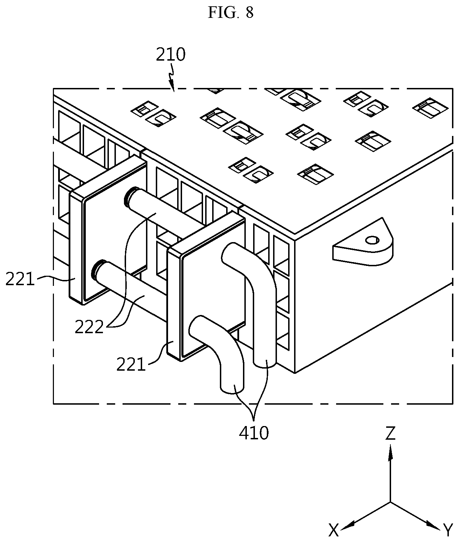

FIG. 6 is a diagram showing the first cell array structure 210 coupled to the base plate 110 of the battery pack according to an embodiment of the present disclosure. FIGs. 7 and 8 are diagrams showing the second cell array structure 220 of the battery pack according to an embodiment of the present disclosure.

Referring to FIGs. 6 to 8, the cell array structures 200, 210, 220 according to an embodiment of the present disclosure may include a plurality of cell array structures. The cell array structures 200, 210, 220 may include the first cell array structure 210 and the second cell array structure 220. The first cell array structure 210 and the second cell array structure 220 may be piled, stacked or installed in the top-bottom direction or Z axis direction. The first cell array structure 210 may be installed, fixed, coupled, mounted or coupled to the upper surface of the base plate 110. The second cell array structure 220 may be disposed, fastened, couple, mounted, installed or fixed to the first cell array structure 210.

Referring to FIGs. 7 and 8, the second cell array structure 220 of the battery pack according to an embodiment of the present disclosure may include the first cooling tube 410. The second cell array structure 220 may include a head 221 through which the cooling fluid flows. Additionally, the second cell array structure 220 may include a sixth cooling tube 222 that communicates a plurality of heads 221. The first cooling tube 410 may be connected, communicated, fastened, coupled or fixed to the rightmost head 221. The first cooling tube 410 may be extended in -Z axis direction or the downward direction.

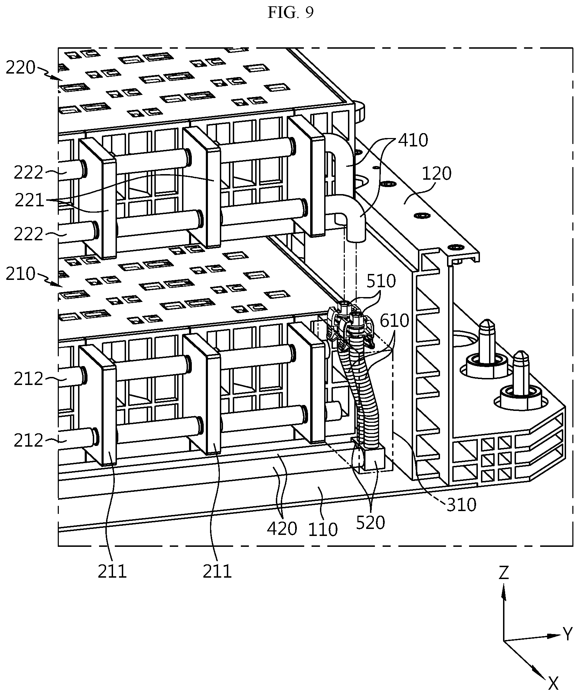

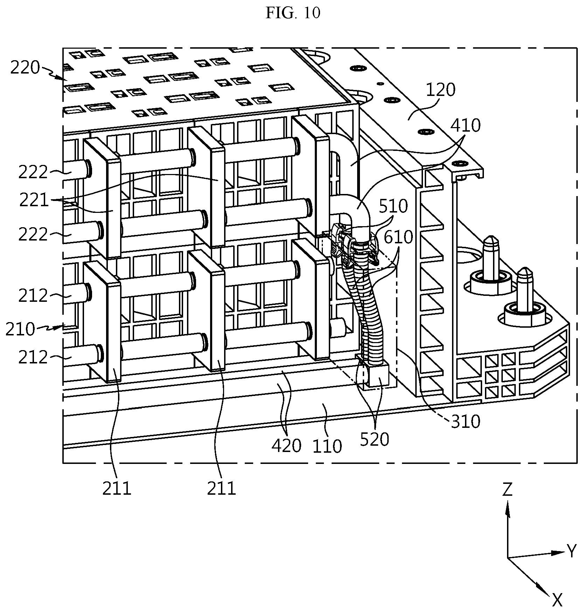

FIG. 9 is a diagram showing the first cell array structure 210 and the second cell array structure 220 separated from each other in the battery pack according to an embodiment of the present disclosure. FIG. 10 is a diagram showing the first cell array structure 210 and the second cell array structure 220 coupled to each other in the battery pack according to an embodiment of the present disclosure. Referring to FIGs. 9 and 10, the first cooling tube 410 and the first connector 510 of the battery pack according to an embodiment of the present disclosure may be in communication with each other in the top-bottom direction.

The first cooling tube 410 and the first connector 510 may be connected, communicated, fastened or coupled in the top-bottom direction or Y axis direction. The second cell array structure 220 may be fastened, assembled, received or coupled in the top-bottom direction or Y axis direction. In this instance, as the second cell array structure 220 is fastened, assembled, received, coupled or fixed to the first cell array structure 210, the first cooling tube 410 and the first connector 510 may be connected, communicated, fastened or coupled to each other.

By this configuration of the present disclosure, assembly efficiency of the battery pack may be improved. The assembly of the second cell array structure 220 and the assembly of the first cooling tube 410 may be done simultaneously.

Referring to FIGs. 9 and 10, the first connector 510 of the battery pack according to an embodiment of the present disclosure may bring the first cooling tube 410 and the first flexible cooling tube 610 into communication with each other in the top-bottom direction.

By this configuration of the present disclosure, cooling efficiency of the battery pack may be improved. As the first cooling tube 410 and the first flexible cooling tube 610 are in communication with each other approximately in a straight line, flow resistance of the cooling fluid may be minimized.

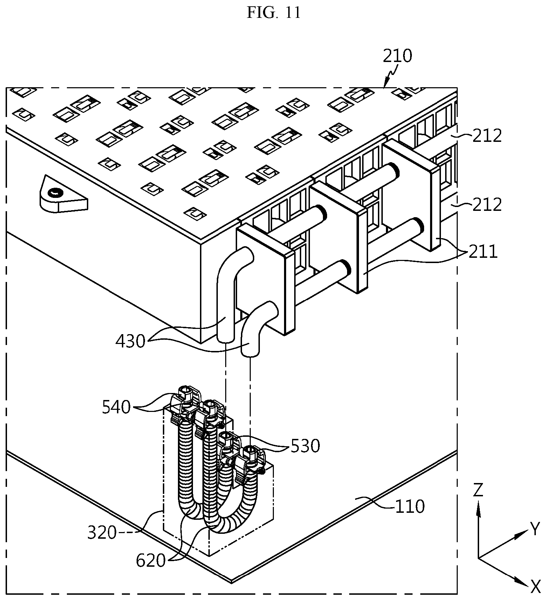

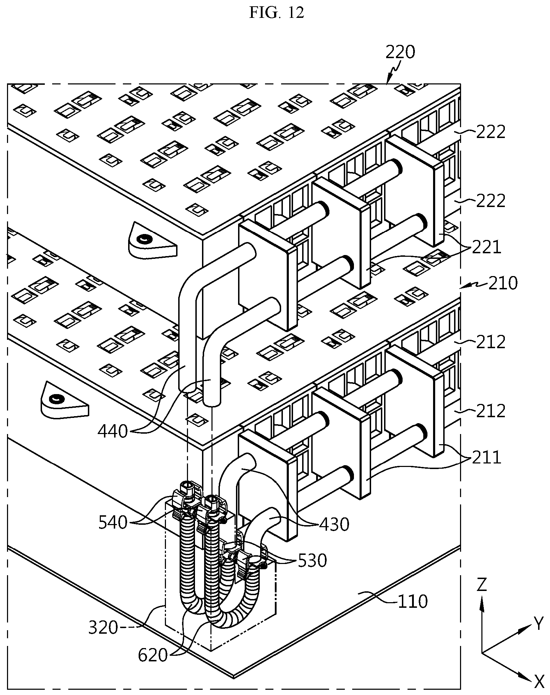

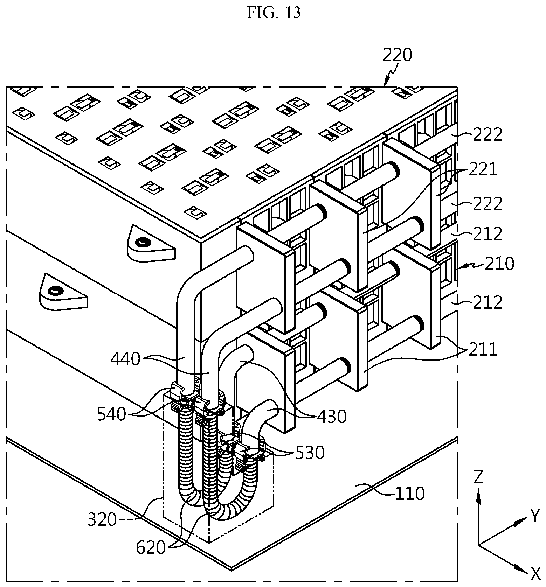

FIG. 11 is a diagram showing the first cell array structure 210 coupled to the base plate 110 of the battery pack according to an embodiment of the present disclosure. FIG. 12 is a diagram showing the first cell array structure 210 and the second cell array structure 220 separated from each other in the battery pack according to an embodiment of the present disclosure. FIG. 13 is a diagram showing the first cell array structure 210 and the second cell array structure 220 coupled to each other in the battery pack according to an embodiment of the present disclosure.

Referring to FIGs. 11 to 13, a second support 320 of the battery pack according to an embodiment of the present disclosure may be disposed inside the case 100. The second support 320 may be fastened, coupled, fixed, attached or assembled to the base plate 110 or the side wall 120. The second support 320 may fix the third connector 530 and the fourth connector 540. In this instance, the third connector 530 may include a pair of third connectors. The pair of third connectors 530 may be in communication with the third cooling tube 430 supplying the cooling fluid to the first cell array structure 210 and the third cooling tube 430 in which the cooling fluid from the first cell array structure 210 flows, respectively.

**In** this instance, the fourth connector 540 may include a pair of fourth connectors. The pair of fourth connectors 540 may be in communication with the fourth cooling tube 440 supplying the cooling fluid to the second cell array structure 220 and the fourth cooling tube 440 in which the cooling fluid from the second cell array structure 220 flows, respectively.

The third connector 530 may be installed, fixed, coupled, attached, assembled, fixed or disposed to the upper surface of the second support 320. Additionally, the fourth connector 540 may be installed, fixed, coupled, attached, assembled, fixed or disposed to the upper surface of the second support 320.

The first cell array structure 210 may include the third cooling tube 430. The first cell array structure 210 may include a head 211 through which the cooling fluid flows. Additionally, the first cell array structure 210 may include a fifth cooling tube 212 that communicates a plurality of heads 211. The third cooling tube 430 may be connected, communicated, fastened, coupled or fixed to the leftmost head 211. The third cooling tube 430 may be extended in -Z axis direction or the downward direction.

The second cell array structure 220 may include the fourth cooling tube 440. The second cell array structure 220 may include the head 221 through which the cooling fluid flows. Additionally, the second cell array structure 220 may include the sixth cooling tube 222 that communicates the plurality of heads 221. The fourth cooling tube 440 may be connected, communicated, fastened, coupled or fixed to the leftmost head 221. The fourth cooling tube 440 may be extended in -Z axis direction or the downward direction.

The third cooling tube 430 and the third connector 530 may be connected, communicated, fastened or coupled to each other in the top-bottom direction or Y axis direction. The first cell array structure 210 may be fastened, assembled, received or coupled in the top-bottom direction or Y axis direction. In this instance, as the first cell array structure 210 is fastened, assembled, received, coupled or fixed to the base plate 110, the third cooling tube 430 and the third connector 530 may be connected, communicated, fastened or coupled to each other.

The fourth cooling tube 440 and the fourth connector 540 may be connected, communicated, fastened or coupled to each other in the top-bottom direction or Y axis direction. The second cell array structure 220 may be fastened, assembled, received or coupled in the top-bottom direction or Y axis direction. In this instance, as the second cell array structure 220 is fastened, assembled, received, coupled or fixed to the first cell array structure 210, the fourth cooling tube 440 and the fourth connector 540 may be connected, communicated, fastened or coupled to each other.

By this configuration of the present disclosure, assembly efficiency of the battery pack may be improved.

Referring to FIGs. 11 to 13, the battery pack according to an embodiment of the present disclosure may include a second flexible cooling tube 620 that brings the third connector 530 and the fourth connector 540 into communication with each other. The second flexible cooling tube 620 may include a pair of second flexible cooling tubes. The second flexible cooling tube 620 may be in communication with the third connector 530. The third cooling tube 430 and the second flexible cooling tube 620 may be in communication with each other. Additionally, the second flexible cooling tube 620 may be in communication with the fourth connector 540. The fourth cooling tube 440 and the second flexible cooling tube 620 may be in communication with each other. The second flexible cooling tube 620 may be disposed inside the second support 320.

By this configuration of the present disclosure, assembly efficiency of the battery pack may be improved. As the second flexible cooling tube 620 bends, space efficiency of the battery pack may be improved.

A vehicle according to the present disclosure may include the above-described battery pack according to the present disclosure. The battery pack according to the present disclosure may be used in vehicle applications, for example, electric vehicles or hybrid electric vehicles. Additionally, in addition to the battery pack, the vehicle according to the present disclosure may further include a variety of other components included in the vehicle. For example, the vehicle according to the present disclosure may further include a car body, a motor, a controller such as an electronic control unit (ECU), etc.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery pack comprising:
a case including a base plate and providing an internal space;
a cell array structure disposed on the base plate, and including a plurality of battery cells;
a cooling tube disposed in the case, equipped in the cell array structure, and extended in a downward direction; and
a connector in communication with the cooling tube.

2. The battery pack according to claim 1,
wherein the cooling tube and the connector are in communication with each other in a top-bottom direction.

3. The battery pack according to claim 1, further comprising:
a first flexible cooling tube in communication with the connector.

4. The battery pack according to claim 3,
wherein the connector brings the cooling tube and the first flexible cooling tube into communication with each other in a top-bottom direction.

5. The battery pack according to claim 3, further comprising:
a port equipped in the case,
wherein the first flexible cooling tube is in communication with the port.

6. The battery pack according to claim 3,
wherein the first flexible cooling tube includes a corrugated tube.

7. The battery pack according to claim 1, further comprising:
a support disposed in the case and configured to fix the connector.

8. The battery pack according to claim 7,
wherein the support is installed at an upper surface of the base plate, and
wherein the connector is installed at an upper surface of the support.

9. The battery pack according to claim 1,
wherein the cell array structure includes:
a first cell array structure disposed at an upper surface of the base plate; and
a second cell array structure disposed at an upper surface of the first cell array structure,
wherein the cooling tube includes:
a first cooling tube equipped in the first cell array structure and extended in the downward direction; and
a second cooling tube equipped in the second cell array structure and extended in the downward direction, and
wherein the connector includes:
a first connector in communication with the first cooling tube; and
a second connector in communication with the second cooling tube.

10. The battery pack according to claim 9, further comprising:
a second flexible cooling tube that brings the first connector and the second connector into communication with each other.

11. A vehicle comprising the battery pack according to any one of claims 1 to 10.
